# EUROPÄISCHE PATENTSCHRIFT

(11) **EP 1 041 322 B1**
(45) Veröffentlichungstag und Bekanntmachung des Hinweises auf die Patenterteilung: **27.07.2005**
(21) Anmeldenummer: 00104618.4
(22) Anmeldetag: 03.03.2000
(51) Int. Cl.: F16J 15/38, F16J 15/36, F16J 15/34

(54) **Gleitringdichtung**
Mechanical seal
Garniture mécanique d'étanchéité

(30) Priorität: 01.04.1999 DE 19914929
(43) Veröffentlichungstag der Anmeldung: 04.10.2000
(73) Patentinhaber: Carl Freudenberg KG, 69469 Weinheim (DE)
(72) Erfinder: Nakano, Kenji, 69469 Weinheim (DE)

(56) Entgegenhaltungen:
- DE-A- 3 909 100
- DE-A- 4 005 721
- US-A- 2 100 220
- US-A- 5 199 720

## Beschreibung

Die Erfindung befaßt sich mit einer Gleitringdichtung.

Eine solche Gleitringdichtung ist auch aus der US-A-5 199 720 bekannt. Gemäß dem einleitenden Teil des Anspruchs 1, offenbart die US-A-5 199 720 eine Gleitringdichtung mit einem Gleitring und einem Gegenring, wobei sich der Gleitring und der Gegenring einander mit Dichtflachen relativ verdrehbar und federkraftbeaufschlagt mit axialer Vorspannung dichtend beruhren, und wobei der Gleitring mittels eines ersten Dichtrings mit einem ersten Mitnehmerring und der Gegenring mittels eines zweiten Dichtrings mit einem zweiten Mitnehmerring drehfest und dichtend verbunden ist, wobei der erste Dichtring und der zweite Dichtring einander zugewandte Stirnseiten haben, die durch Flansche des jeweiligen Mitnehmerrings im wesentlichen vollstandig uberdeckt sind, wobei die Flansche jeweils als Radialflansche ausgebildet sind.

Aus DE 38 98 100 A1 ist ein Verbindungsaufbau für die Befestigung eines Gleitrings aus Keramik an einem Befestigungsteil aus Kunststoff bekannt. Auch bei dieser Auslegung liegen zumindest Radialbereiche des Gleitrings gegenüber dem abzudichtenden Medium frei und können somit mit dem abzudichtenden Medium unmittelbar in Berührung kommen.

Der Erfindung liegt daher die Aufgabe zugrunde, eine Gleitringdichtung der eingangs genannten Art bereitzustellen, weiche auch über eine lange Gebrauchsdauer hinweg weitgehend unabhängig vom abzudichtenden Medium eine gleich bleibend drehfeste Zuordnung von Gleitring und Gegenring zum jeweiligen Mitnehmerring gestattet.

Nach der Erfindung wird hierzu eine Gleitringdichtung bereitgestellt, welche die Merkmale des Patentanspruchs 1 aufweist.

Bei der erfindungsgemäßen Gleitringdichtung wird der erste und/oder der zweite Dichtring von dem jeweiligen Mitnehmerring im wesentlichen vollständig auch an den Radialbereichen überdeckt und umschlossen, so daß der erste und/oder der zweite Dichtring nahezu keine freien Oberflächen aufweisen, die unmittelbar mit dem abzudichtenden Medium in Berührung kommen. Auf diese Weise läßt sich ein Aufquellen des Werkstoffs der Dichtringe wirksam auf ein Minimum reduzieren. Insbesondere wird vermieden, daß die Vorspannung der Dichtringe zwischen Gleitring und erstem Mitnehmerring und/oder Gegenring und zweitem Mitnehmerring durch ein Aufquellen des Materials des jeweiligen Dichtrings reduziert wird, und somit eine gleich bleibende drehfeste Zuordnung von Gleitring und Gegenring zum jeweiligen Mitnehmerring sichergestellt wird. Somit hat das abzudichtende Medium im wesentlichen keinen Einfluß auf die Zuordnung von Gleitring und Gegenring zum jeweiligen Mitnehmerring. Die Gebrauchseigenschaften des erfindungsgemäßen Gleitrings bleiben auch nach einer langen Gebrauchsdauer nahezu unverändert gleich. Durch das flanschartige Umgreifen des Werkstoffs der Dichtringe dank der Auslegung der jeweiligen Mitnehmerringe kann der Werkstoff der Dichtringe nicht ausweichen, so daß im Falle eines minimalen Aufquellens der Dichtringe eine verstärkte elastische Vorspannung zwischen dem Gleitring und dem ersten Mitnehmerring und/oder dem Gegenring und dem zweiten Mitnehmerring hierdurch bewirkt wird, aber die drehfeste Zuordnung von Gleitring und Gegenring zum jeweiligen Mitnehmerring im wesentlichen unverändert bleibt.

Gemäß einer bevorzugten Ausführungsform bestehen der erste und/oder der zweite Dichtring aus einem polymeren Werkstoff, beispielsweise FKM (Fluorpolymerisat). Der Gleitring und/oder der Gegenring bestehen zumeist aus einem spröden Werkstoff wie beispielsweise Kohle oder Siliciumcarbit und werden von den entsprechenden Mitnehmerringen, die bevorzugt aus einem rostfreien metallischen Werkstoff bestehen, jeweils mit radialem Abstand umschlossen. Innerhalb des durch den Abstand gebildeten Spalts sind die jeweiligen Dichtringe angeordnet. Gebrauchsdauerverringernde, unerwünscht hohe mechanische Belastungen von Gleit- und/oder Gegenring durch die entsprechenden Mitnehmerringe werden durch die Dichtringe vermieden.

Vorzugsweise ist der erste Dichtring mit einer Armierung versehen, die vollständig vom polymeren Werkstoff umschlossen ist. Die Armierung besteht zumeist aus Stahl und ist durch die vollständige Ummantelung beispielsweise vor Korrosion durch das abzudichtende Medium geschützt. Die Armierung bewirkt eine größere Steifigkeit des ersten Dichtrings und dadurch eine verbesserte Abdichtung zwischen den gegeneinander abzudichtenden Räumen.

Erfindungsgemäß weisen der erste und/oder der zweite Dichtring einander zugewandte Stirnseiten auf, die auf der dem abzudichtenden Medium zugewandten Seite den jeweiligen Flansch des Mitnehmerrings unter elastischer Vorspannung dichtend berühren. Hierbei ist von Vorteil, daß eine Volumenvergrößerung der Dichtringe bei Beaufschlagung mit dem abzudichtenden Medium verhindert wird. Eine Beaufschlagung der Dichtringe mit dem abzudichtenden Medium bewirkt durch die Einspannung der Dichtringe in den Mitnehmerringen mit den Flanschen eine sich erhöhende Vorspannung auf den Gleit- und/oder Gegenring.

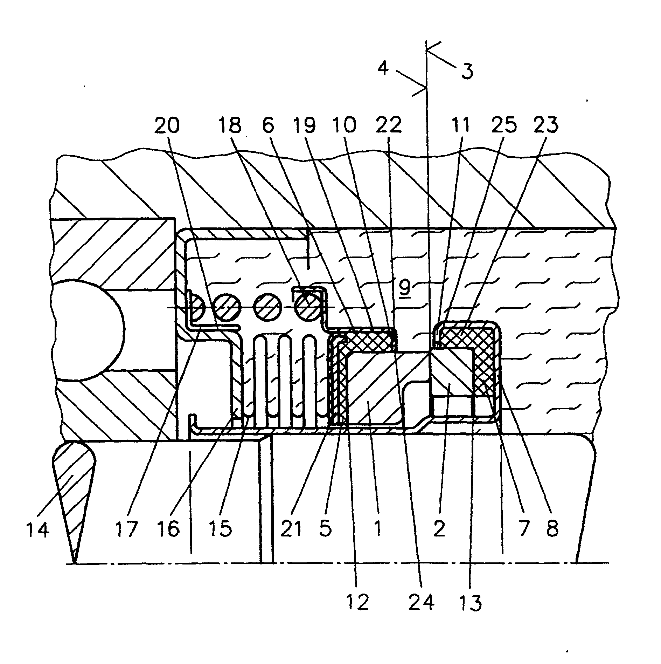

Ein Ausführungsbeispiel der erfindungsgemäßen Gleitringdichtung wird nachfolgend anhand der einzigen Figur der Zeichnung näher erläutert.

Die Gleitringdichtung besteht im wesentlichen aus einem Gleitring 1 aus Kohle, der sich mit seiner ebenen Dichtfläche 3 an der ebenen Dichtfläche 4 des Gegenrings 2, der aus Siliciumcarbit besteht, unter axialer Vorspannung elastisch und dichtend abstützt.

Sowohl der Gleitring 1 als auch der Gegenring 2 sind außenumfangsseitig und im Bereich ihrer von einander abgewandten Stirnseiten 12, 13 von einem jeweils winkelförmigen Dichtring 5, 7 umschlossen. Die beiden Dichtringe 5, 7 sind materialeinheitlich ausgebildet und bestehen in diesem Ausführungsbeispiel aus FKM.

Die metallischen Bauteile der Gleitringdichtung bestehen in diesem Ausführungsbeispiel jeweils aus Edelstahl und sind gegen das abzudichtende Medium 9 resistent.

Zur Funktion der Gleitringdichtung wird folgendes ausgeführt:

Der Gegenring 2, der zweite Dichtring 7 und der zweite Mitnehmerring 8 bilden eine vormontierbare Einheit, die drehfest mit der abzudichtenden Welle 14 verbunden ist.

Der Gleitring 1, der erste Dichtring 5 und der erste Mitnehmerring 6 sind einander ebenfalls drehfest zugeordnet. Auch ein Faltenbalg 15, der in diesem Ausführungsbeispiel aus Edelstahl besteht, ein Gehäuse 16 sowie ein Haltering 17 und eine Druckfeder 18 sind zum Gleitring 1 drehfest angeordnet.

Die Druckfeder 18 und der Faltenbalg 15 sind einander in einer funktionstechnischen Parallelschaltung zugeordnet und bewirken eine elastische Anpressung der Dichtflächen 3 und 4 von Gleitring 1 und Gegenring 2 in axialer Richtung aneinander.

Eine erste Stirnseite 21 des Faltenbalgs 15 ist dem Gleitring 1 und eine zweite Stirnseiten 20 des Faltenbalgs 15 dem Gehäuse 16 ungehaftet, in diesem Ausführungsbeispiel ausschließlich kraftschlüssig zugeordnet. Dadurch, daß die Stirnseiten 21, 20 des Faltenbalgs 15 ausschließlich geklemmt sind, wird sowohl die Montage als auch die Demontage der Gleitringdichtung wesentlich vereinfacht

Einander zugewandte Stirnseiten 22, 23 der beiden Dichtringe 5, 7 sind von Flanschen 10, 11 im wesentlichen vollständig überdeckt und anliegend berührt, wobei die Flansche 10, 11 jeweils als Radialflansch ausgebildet sind. Innenumfangsseitig umschließen die Flansche 10, 11 den Gleitring 1 und den Gegenring 2 mit radialem Abstand, so daß eine Beschädigung der stoßempfindlichen Werkstoffe von Gleit- 1 und Gegenring 2 während der bestimmungsgemäßen Verwendung der Gleitringdichtung ausgeschlossen ist.

Die beiden Dichtringe 5, 7 können nur über von dem Abstand gebildeten Spalte 24, 25 vom abzudichtenden Medium 9 beaufschlagt werden. Bewirkt die Beaufschlagung der polymeren Werkstoffe, aus denen die Dichtring 5, 7 bestehen, ein Aufquellen der Dichtringe 5, 7, so wird die radiale Vorspannung zwischen dem Gleitring 1 und dem ersten Mitnehmerring 6 sowie dem Gegenring 2 und dem zweiten Mitnehmerring 8 erhöht, da das jeweilige Volumen der Einbauräume des ersten und des zweiten Dichtrings 5, 7 im wesentlichen konstant ist somit können die Dichtringe 5, 7 bei einem Aufquellen räumlich nicht ausweichen.

Der erste Dichtring ist auf der der Stirnseite 12 abgewandten Seite von einer stirnseitigen Faltenwand des Faltenbalgs 15 überdeckt und dadurch nicht mit abzudichtenden Medium beaufschlagt.

## Patentansprüche

1. Gleitringdichtung mit einem Gleitring (1) und einem Gegenring (2), wobei sich der Gleitring (1) und der Gegenring (2) einander mit Dichtflächen (3, 4) relativ verdrehbar und federkraftbeaufschlagt mit axialer Vorspannung dichtend berühren, und wobei der Gleitring (1) mittels eines ersten Dichtrings (5) mit einem ersten Mitnehmerring (6) und der Gegenring (2) mittels eines zweiten Dichtrings (7) mit einem zweiten Mitnehmerring (8) drehfest und dichtend verbunden ist, wobei der erste Dichtring (5) und der zweite Dichtring (7) einander zugewandte Stirnseiten (22, 23) haben, die durch Flansche (10, 11) das jeweiligen Mitnehmerrings (6,8) im wesentlichen vollständig überdeckt sind, wobei die Flansche (10, 11) jeweils als Radialflansche ausgebildet sind, **dadurch gekennzeichnet, daß** die einander zugewandten Stirnseiten (22, 23) der beiden Dichtringe (5,7) durch die flansche (10,11) anliegend berührt sind, und die Flansche (10, 11) innenumfangsseitig den Gleitring (1) und den Gegenring mit radialem Abstand umschließen.

2. Gleitringdichtung nach Anspruch 1, **dadurch gekennzeichnet, daß** der erste (5) und/oder der zweite Dichtring (7) aus polymerem Werkstoff besteht.

3. Gleitringdichtung nach einem der Ansprüche 1 oder 2, **dadurch gekennzeichnet, daß** der erste (6) und/oder der zweite Mitnehmerring (8) aus einem metallischen Werkstoff besteht.

4. Gleitringdichtung nach einem der Ansprüche 1 bis 3, **dadurch gekennzeichnet, daß** der erste (5) und der zweite Dichtring (7) auf der dem abzudichtenden Medium (9) zugewandten Seite einander zugewandte Strinseiten (22, 23) aufweisen, die den jeweiligen Flansch (10, 11) des Mitnehmerrings (6, 8) unter elastischer Vorspannung dichtend berühren.

## Claims

1. Mechanical seal having a sliding ring (1) and a counter-ring (2), the sliding ring (1) and the counter-ring (2) sealingly touching each other by means of sealing faces (3, 4) with axial prestress and in a manner such that they can be rotated relative to each other and acted upon by spring force, and the sliding ring (1) being connected in a rotationally fixed and sealing manner to a first driving ring (6) by means of a first sealing ring (5) and the counter-ring (2) being connected in a rotationally fixed and sealing manner to a second driving ring (8) by means of a second sealing ring (7), the first sealing ring (5) and the second sealing ring (7) having mutually facing end sides (22, 23) which are essentially completely covered by flanges (10, 11) of the particular driving ring (6, 8), the flanges (10, 11) being designed in each case as radial flanges, **characterized in that** the mutually facing end sides (22, 23) are in contact with the two sealing rings (5, 7) in an abutting manner by means of the flanges (10, 11), and the flanges (10, 11) on the inner circumference surround the sliding ring (1) and the counter-ring at a radial distance.

2. Mechanical seal according to Claim 1, **characterized in that** the first (5) and/or the second sealing ring (7) is/are composed of polymeric material.

3. Mechanical seal according to either of Claims 1 and 2, **characterized in that** the first (6) and/or the second driving ring (8) is/are composed of a metallic material.

4. Mechanical seal according to one of Claims 1 to 3, **characterized in that** the first (5) and the second sealing ring (7) have, on the side facing the medium (9) to be sealed off, mutually facing end sides (22, 23) which sealingly touch the respective flange (10, 11) of the driving ring (6, 8) under elastic prestress.

## Revendications

1. Garniture d'étanchéité à bague de glissement comportant une bague de glissement (1) et une contre-bague (2), la bague de glissement (1) et la contre-bague (2) se touchant de façon étanche avec des surfaces d'étanchéité (3, 4) capables de tourner l'une par rapport à l'autre et soumises à la force d'un ressort avec une précontrainte axiale, la bague de glissement (1) étant reliée de façon étanche et rigide à la rotation à une première bague d'entraînement (6) au moyen d'une première bague d'étanchéité (5) et la contre-bague (2) étant reliée de façon étanche et rigide à la rotation à une seconde bague d'entraînement (8) au moyen d'une seconde bague d'étanchéité (7), la première bague d'étanchéité (5) et la seconde bague d'étanchéité (7) présentant des côtés frontaux (22, 23) tournés l'un vers l'autre, lesquels sont recouverts substantiellement entièrement par une collerette (10, 11) des bagues d'entraînement (6, 8) respectives, chacune des collerettes (10, 11) étant conformée en tant que collerette radiale, **caractérisée en ce que** les côtés frontaux (22, 23) tournés l'un vers l'autre des deux bagues d'étanchéité (5, 7) sont serrés contre les collerettes (10, 11) et **en ce que** les collerettes (10, 11) entourent du côté périphérique intérieur la bague de glissement (1) et la contre-bague (2) avec une distance radiale.

2. Garniture d'étanchéité à bague de glissement selon la revendication 1, **caractérisée en ce que** la première (5) et/ou la seconde bague d'étanchéité (7) sont (est) en matériau polymère.

3. Garniture d'étanchéité à bague de glissement selon la revendication 1 ou 2, **caractérisée en ce que** la première (6) et/ou la seconde bague d'entraînement (8) sont (est) en matériau métallique.

4. Garniture d'étanchéité à bague de glissement selon l'une quelconque des revendications 1 à 3, **caractérisée en ce que** la première (5) et la seconde bague d'étanchéité (7) présentent du côté tourné vers l'agent (9) à étancher des côtés frontaux (22, 23) tournés l'un vers l'autre, lesquels touchent de façon étanche sous précontrainte élastique la collerette (10, 11) correspondante de la bague d'entraînement (6, 8).
